# EUROPÄISCHE PATENTANMELDUNG

(11) **EP 1 258 959 A1**
(43) Veröffentlichungstag der Anmeldung: **20.11.2002**
(21) Anmeldenummer: 02010592.0
(22) Anmeldetag: 10.05.2002
(51) Int. Cl.: H02G 1/12, B23D 21/08, B25B 7/10

(54) **Verstellbares Schälgerät in Zangen- oder Zwingenform**

(30) Priorität: 10.05.2001 DE 20107920 U; 08.01.2002 DE 20200142 U
(71) Anmelder: Golletz, Paul T., 61348 Bad Homburg (DE)
(72) Erfinder: Golletz, Paul T., 61348 Bad Homburg (DE)
(74) Vertreter: Mierswa, Klaus, Dipl.-Ing.

(57) **Zusammenfassung**

Die Erfindung betrifft ein Schälgerät zum Abschälen der äußeren Sicht eines Kabels oder Rohres. Ein erfindungsgemäßes Schälgerät umfaßt zwei Arme mit Lagern, die zusammen ein Aufnahmelager für das Kabel bzw. Rohr bilden. Einer der Arme trägt ein Messer. Einer der Arme weist einen Drehzapfen auf, der in einer ersten Richtung einen ersten Durchmesser und in einer zweiten Richtung einen zweiten Durchmesser aufweist, welcher kleiner ist als der erste Durchmesser. Eine Anpassung des Schälwerkzeuges an eine Vielzahl verschiedener Rohr- oder Kabeldurchmesser ist dadurch möglich, daß der andere Arm ein Langloch aufweist, welches den Drehzapfen aufnimmt und durch eine Reihe von Bohrungen und zwischen diesen liegenden Verengungen gebildet ist, wobei der Durchmesser der Bohrungen größer als der erste Durchmesser und die Weite der Verengungen kleiner als der erste und größer als der zweite Durchmesser ist, so daß der Drehzapfen ähnlich wie bei einer Rohrzange in jede Bohrung verschiebbar und dort arretierbar ist.

## Beschreibung

### Technisches Gebiet:

Die Erfindung betrifft ein Schälgerät zum Schälen oder Einschneiden eines Rohres, insbesondere eines solchen, das aus Kunststoff besteht oder eine Mantelschicht aus Kunststoff oder eine glasfaserverstärkte Schicht aufweist, oder eines Kabels, insbesondere dessen Mantel- oder Isolierschicht.

### Stand der Technik:

In vielen Fällen, z.B. um Anschweißungen vornehmen zu können, ist es erforderlich, zumindest einen Teil einer äußeren Schicht, z.B. eine Oxidschicht von Rohren der eingangs genannten Art zu entfernen. In anderen Fällen, z.B. um Abzweigungen zu installieren, ist es erforderlich, zumindest einen Teil einer äußeren Schicht von Kabeln, insbesondere der Mantel- oder Isolierschicht von Elektrokabeln, zu entfernen. Aus der DE 295 16 513.8 ist ein Schälgerät mit verfahrbarem Dorn und zwei schraubzwingenartig gegeneinander verschiebbaren Teilen bekannt. Bei diesem Gerät ist innerhalb des durch ein Prismen- oder Rollenlager des einen Zwingenteils und ein Gegenlager des anderen Zwingenteils gebildeten Aufnahmelagers ein Dorn angeordnet, der einen in Richtung seiner Längsachse sich erstreckenden zylindrischen Fortsatz aufweist, der das Aufnahmelager überragt und dessen Durchmesser dem lichten Innendurchmesser des Rohres entspricht. Das Rohr wird in axialer Richtung auf den Fortsatz aufgeschoben und nahe seines Endes durch den in dieser Richtung verfahrbaren Dorn bearbeitet.

Ein Nachteil des in der DE 295 16 513.8 beschriebenen Gerätes besteht darin, daß konstruktionsbedingt nur die Endbereiche eines Rohres bearbeitet werden können, wobei die axiale Ausdehnung der bearbeiteten Fläche durch den Verfahrweg des Dorns begrenzt ist.

Ferner sind in der Praxis die Platzverhältnisse, unter denen die Schälung vorgenommen werden muß, in vielen Fällen sehr beengt, z.B. dann, wenn bereits in der Erde oder in Rohren verlegte Kabel oder Rohre zonal zu schälen sind, wozu diese an den entsprechenden Stellen freigelegt werden müssen. Beengte Platzverhältnisse liegen z.B. auch dann vor, wenn eines von zwei oder mehreren in geringem Abstand parallel verlaufenden Kabeln oder Rohren oder ein Kabel oder Rohr in unmittelbarer Nachbarschaft z.B. einer Gabelung, einer Verzweigung, eines 180°-Bogens oder einer Rohrschelle zonal zu schälen ist. Die Anwendung des in der DE 295 16 513.8 beschriebenen Gerätes bereitet unter solcherart beengten Platzverhältnissen aufgrund der Geometrie bzw. Bauform dieses Gerätes oftmals große Schwierigkeiten.

Ein weiterer Nachteil des in der DE 295 16 513.8 beschriebenen Gerätes besteht darin, daß das Einstellen des Gerätes auf einen bestimmten Durchmesser des Rohres oder Kabels mittels einer Spindel erfolgt und daher zeitaufwendig und arbeitsintensiv ist, was sich insbesondere dann störend auswirkt, wenn viele Schälvorgänge an Kabeln oder Rohren mit ständig wechselndem Durchmesser vorzunehmen sind.

Der Erfindung liegt demzufolge die Aufgabe zugrunde, ein Schälgerät bereitzustellen, mit dem beliebig wählbare und beliebig ausgedehnte Bereiche der äußeren Schicht oder Schichten eines Kabels oder Rohres der eingangs genannten Art abgeschält werden können, wobei das Schälgerät auch unter beengten Platzverhältnissen eingesetzt werden kann und innerhalb kürzester Zeit unter sehr geringem Arbeitsaufwand auf den Durchmesser des zu schälenden Kabels oder Rohres einstellbar ist.

Diese Aufgabe wird erfindungsgemäß gelöst durch ein Schälgerät in Form einer zweiarmigen Zange oder Zwinge zum Einschneiden oder Schälen einer äußeren Schicht oder von Schichten eines Kabels oder Rohres, insbesondere Kunststoffrohr oder kunststoffbeschichtetes Rohr, umfassend einen ersten Arm mit einem Lager und einem Drehzapfen, sowie einen zweiten Arm, welcher ein Gegenlager aufweist und gegenüber dem ersten Arm um den Drehzapfen von einer geöffneten in eine geschlossene Stellung und umgekehrt schwenkbar ist, wobei ein Messer mit einer Schnittkante entweder an dem ersten Arm im Bereich des Lagers oder an dem zweiten Arm im Bereich des Gegenlagers angeordnet und die Schnittkante das Lager bzw. das Gegenlager in Richtung des Kabels oder Rohres überragt, dadurch gekennzeichnet, daß
- das Lager zusammen mit dem Gegenlager in geschlossener Stellung ein Aufnahmelager zur stabilen Mehrpunktlagerung und Rundführung des
   Schälgeräts bezüglich des Kabels oder Rohres bildet,
- der Drehzapfen in einer ersten Richtung senkrecht zu seiner Achse einen ersten Durchmesser und in einer zweiten Richtung senkrecht zu seiner Achse einen zweiten Durchmesser aufweist, welcher kleiner ist als der erste Durchmesser,
- der zweite Arm ein Langloch aufweist, welches den Drehzapfen aufnimmt, in einer zur Richtung vom Lager zum Gegenlager im wesentlichen parallelen Richtung verläuft und durch eine Mehrzahl von in einer Reihe angeordneten Bohrungen und zwischen den Bohrungen liegenden Verengungen gebildet ist, wobei der Durchmesser der Bohrungen größer als der erste Durchmesser und die lichte Weite der Verengungen kleiner als der erste und größer als der zweite Durchmesser ist, und
- der Drehzapfen in Bezug auf seine Achse so ausgerichtet ist, daß dieser in geöffneter Stellung zur Aufweitung bzw. Verengung des Aufnahmelagers in Längsrichtung des Langlochs durch die Verengungen hindurch in jede der Bohrungen verschiebbar und in geschlossener Stellung gegenüber einer Verschiebung in dieser Richtung in einer der Bohrungen arretiert ist.

Zum Zwecke der Anpaßbarkeit an unterschiedliche Durchmesser des zu schälenden Rohres oder Kabels sind somit der erste und der zweite Arm mittels eines verstellbaren Mechanismus miteinander verbunden, welcher in ähnlicher oder identischer Form als Verstellmechanismus für handelsübliche Rohrzangen bekannt ist. Insbesondere kann eine handelsübliche Rohrzange nachträglich mit einem Lager, einem Gegenlager und einem Messer ausgestattet und damit zu einem erfindungsgemäßen Schälgerät nachgerüstet werden.

Zur Bearbeitung wird das erfindungsgemäße Schälgerät in geöffnete Stellung gebracht und so über das Kabel oder Rohr geschoben und so positioniert und ausgerichtet, daß sich der abzuschälende Bereich seiner Oberfläche im Bereich des Messers befindet. Anschließend wird das Schälgerät durch Verschieben des Drehzapfens in Längsrichtung des Langlochs durch die Verengungen hindurch an den Durchmesser des zu schälenden Kabels oder Rohres angepaßt, so daß hierzu vorteilhafterweise nur ein einziger kurzer Arbeitsgang erforderlich ist. Danach wird das Schälgerät in geschlossene Position gebracht, so daß der Drehzapfen in einer Bohrung arretiert ist und das Kabel oder Rohr im Aufnahmelager aufgenommen ist. Das Messer dringt hierbei in die Wandung des Kabels bzw. Rohres ein.

In einer bevorzugten Ausführungsform der Erfindung sind die gegenseitigen Anstände der Bohrungen entsprechend den Durchmeserunterschieden zwischen den einzelnen genormten Nennweitenstufen von Rohren gewählt.

Wird nun das erfindungsgemäße Schälgerät gegenüber dem Kabel oder Rohr in einem ersten Drehvorgang um einen bestimmten Drehwinkel oder um eine volle Umdrehung um die Rohrachse gedreht, so wird von der Kabel- bzw. Rohroberfläche eine Schicht definierter Stärke entsprechend dem Drehwinkel und der Länge der Schnittkante konzentrisch zur Kabel- bzw. Rohrachse abgeschält.

Alternativ dazu kann auf eine Drehbewegung verzichtet werden, so daß durch das erfindungsgemäße Schälgerät lediglich ein Schnitt in die Mantelfläche des Rohres oder Kabels erfolgt. Selbstverständlich können durch Aneinanderreihen von einzelnen Schnitten beliebig lange Schnitte ausgeführt werden.

Das Messer kann mittels eines Verstellmechanismus in einer Richtung parallel zu seiner Hauptebene und senkrecht zu seiner Schnittkante verstellbar sein, so daß die Eindringtiefe der Schnittkante in das Kabel oder Rohr einstellbar ist.

Die Schnittkante des Messers ist in einer Ausführungsform der Erfindung parallel zur Achse des Kabels oder Rohres angeordnet, so daß durch eine Drehbewegung des erfindungsgemäßen Schälgerätes um einen bestimmten Winkel oder eine volle Umdrehung um die Achse des Rohres oder Kabels eine zonale Schälung erfolgt oder ein Schnitt in Längsrichtung des Rohres oder Kabels erfolgt. In einer anderen Ausführungsform der Erfindung ist die Schnittkante des Messers senkrecht zur Achse des Kabels oder Rohres angeordnet, so daß ein Schnitt in Umfangsrichtung des Rohres oder Kabels erfolgt.

Durch Ausführen einer Drehbewegung um 360° wird in diesem Fall ein senkrecht um die Rohr- oder Kabelachse umlaufender Schnitt erzeugt. Die beiden genannten Ausführungsformen können sehr vorteilhaft kombiniert z.B. dazu eingesetzt werden, um einen bestimmten Abschnitt eines Kabels von einer Isolierschicht zu befreien, wobei zunächst mit der zweitgenannten Ausführungsform zwei umlaufende Schnitte durch die Isolierschicht ausgeführt und dann mit der erstgenannten Ausführungsform eine oder zwei Mantellinien des zwischen den Schnitten liegenden zylindrischen Abschnitts aufgeschnitten werden, damit der abgetrennte Abschnitt der Isolierschicht bequem abnehmbar ist.

In einer weiteren Ausführungsform der Erfindung ist die Schnittkante des Messers schräg zur Achse des Kabels oder Rohres so angeordnet, daß durch eine Drehbewegung des erfindungsgemäßen Schälgerätes um die Achse des Rohres oder Kabels ein spiralförmiger Schnitt erzeugt wird, was ebenfalls ein bequemes Abnehmen der abgetrennten Abschnitts erlaubt.

Das Messer kann mittels eines elastischen Bauelements, insbesondere Tellerfeder, Tellerfederpaket oder Druckfeder, in einer Richtung parallel zu seiner Hauptebene und senkrecht zu seiner Schnittkante federnd angeordnet sein, so daß es entgegen dessen Rückstellkraft des elastischen Bauelements auch ohne Veränderung der Stellung des ersten und zweiten Arms um eine begrenzte Strecke gegenüber der Achse des Kabels oder Rohres angehoben werden kann.

Diese Elastizität ist bei der Dosierung der Kraft, mit der das Messer auf bzw. in die Wandung des Rohres gedrückt wird, von Nutzen. Eine solche Elastizität erleichtert ferner insbesondere das Abschälen von Kabeln bzw. Rohren von unregelmäßig oder z.B. elliptisch verformter Querschnittsform.

Das Gegenlager umfaßt gemäß einer Ausführungfsform der Erfindung mindestens zwei Auflager, welche in der geschlossenen Stellung auf dem Kabel oder Rohr aufliegen und mit dem Lager ein Dreieck aufspannen, durch welches die Achse des Kabels oder Rohres verläuft, so daß dasselbe stabil in dem Aufnahmelager aufgenommen ist, wobei mindestens eines der Auflager oder das Lager mittels mindestens eines elastischen Bauelementes, insbesondere Druckfeder oder Tellerfeder, bezüglich der Achse des Kabels oder Rohres in radialer Richtung federnd an dem ersten bzw. zweiten Arm angeordnet ist. Auch diese Elastizität erleichtert das Abschälen von Kabeln bzw. Rohren von unregelmäßig oder z.B. elliptisch verformter Querschnittsform. Ferner kann durch diese Elastizität vorteilhaft erreicht werden, daß das Lager und das Gegenlager auch bei aneinander arretierten Armen des Schälwerkzeuges stets unter Druck am Kabel oder Rohr anliegen. Geeignete Arretiermechnismen werden unten noch erläutert.

Das Messer kann starr oder radial verstellbar an dem Lager angeordnet sein. In diesem Fall ist bei einem federnd an dem Schälwerkzeug angeordneten Lager auch das Messer federnd an dem Schälwerkzeug angeordnet.

Das Lager kann ein Gleitlager, ein Prismenlager, ein Rollenlager oder ein Walzenlager sein.Ebenso kann das Gegenlager ein Gleitlager, ein Prismenlager ein Rollenlager oder ein Walzenlager sein.

Zur Erleichterung der Handhabung können der erste oder der zweite Arm oder beide Arme jeweils einen an einer als Hebelarm zur Ausführung einer Drehbewegung des Schälgeräts dienenden Stange angeordneten Griff aufweisen.

Ferner kann zur Erleichterung der Handhabung der erste Arm gegenüber dem zweiten Arm in geschlossener Stellung mittels eines lösbaren Arretiermechanismus, z.B. Splintmechanismus, gegen eine Schwenkbewegung in die geöffnete Stellung arretierbar sein.

Der Splintmechanismus kann z.B. eine Mehrzahl von ersten Splintlöchern, ein zweites Splintloch sowie einen Splint umfassen, wobei die ersten Splintlöcher im ersten Arm und das zweite Splintloch im zweiten Arm angeordnet sind oder umgekehrt, und der Splint in der geschlossenen Stellung das zweite Splintloch sowie eines der ersten Splintlöcher zu durchragen und somit eine Relativbewegung des ersten gegenüber dem zweiten Arm zu unterbinden imstande ist. Der gegenseitige Abstand der ersten Splintlöcher entspricht dabei demjenigen der Achsen der Bohrungen des Langloches, so daß jedes der ersten Splintlöcher mit einer Bohrung des Langloches korrespondiert. Dies bedeutet, daß die Arme vorteilhafterweise in jeder möglichen, durch die Bohrungen des Langloches vorgegebenen geschlossenen Stellung gegenseitig arretierbar sind.

Zur Erleichterung der Handhabung kann der Splint mit einer Feder versehen sein, welche ein selbsttätiges Einrasten des Splints in die zweiten Splintlöcher zu bewirken imstande ist.

Gemäß einer anderen Ausführungsform umfaßt der Arretiermechanismus ein Zugglied, welches die von dem Langloch abgewandten Endbereiche des ersten und des zweiten Armes in der geschlossenen Stellung so miteinander zu verriegeln imstande ist, daß ein Schwenken des ersten Arms gegenüber dem zweiten Arm in Richtung der geöffneten Stellung unterbunden ist und die beiden Arme zusammen mit dem Zugglied das Kabel oder Rohr vollständig umschließen, wobei das Lager und Gegenlager unter Druck auf dem Kabel oder Rohr aufliegen.

Das Zugglied kann z.B. am ersten Arm angelenkt und am zweiten Arm mittels eines lösbaren Einrastmechanismusses arretierbar sein, oder umgekehrt, wobei der Einrastmechanismus zum Zweck der Anpassung an verschiedene Kabel- oder Rohrdurchmesser eine Mehrzahl von Einraststufen besitzen kann. Hierbei kann der gegenseitige Abstand der Einraststufen demjenigen der Achsen der Bohrungen des Langloches entsprechen, so daß jede Einraststufe mit einer Bohrung des Langloches korrespondiert.

Gemäß einer anderen Ausführungsform ist das Zugglied federbelastet am ersten oder zweiten Arm angeordnet. Auch diese Elastizität erleichtert das Abschälen von Kabeln bzw. Rohren von unregelmäßig oder z.B. elliptisch verformter Querschnittsform. Ferner kann auch durch diese Elastizität vorteilhaft erreicht werden, daß das Lager und das Gegenlager auch bei aneinander arretierten Armen des Schälwerkzeuges stets unter Druck am Kabel oder Rohr anliegen.

Der erste Arm kann einen ersten Schaft und der zweite Arm einen zweiten Schaft aufweisen, wobei der erste und der zweite Schaft jeweils als Handgriff und Hebelarm dienen, welcher z.B. eine Einhand-Bedienung des erfindungsgemäßen Schälgerätes ermöglichen oder erleichtern kann.

Gemäß einer Ausführungsform der Erfindung ist der Drehzapfen im wesentlichen zwischen dem Aufnahmelager und dem ersten und zweiten Schaft angeordnet.

Gemäß einer alternativen Ausführungsform der Erfindung ist das Aufnahmelager im wesentlichen zwischen dem Drehzapfen und dem ersten und zweiten Schaft angeordnet.

Gemäß einer Ausführungsform der Erfindung ist im Bereich des Messers ein erster Anschlag so angeordnet, daß die Schnittkante den ersten Anschlag in Richtung des Kabels oder Rohres überragt und die maximale Schnitttiefe des Messers durch den ersten Anschlag begrenzt ist. Die Schnitttiefe kann insbesondere so gewählt sein, daß die gerade der Stärke eine äußeren Isolierschicht eines Kabels entspricht, welches mit Hilfe des erfimdungsgemäßen Schälwerkzeuges bearbeitet werden soll.

Der erste Anschlag kann gegenüber dem Messer in zur Längsachse der Kabels oder Rohres radialer Richtung verstellbar sein, so daß die maximale Schnitttiefe des Messers durch Verstellen des ersten Anschlages veränderbar ist; d.h. die Schnittiefe kann je nach Bedarf auf unterschiedliche Werte eingestellt werden.

In einer weiteren Ausführungsform der Erfindung verläuft die Hauptebene des Messers parallel zur Längsachse des Kabels oder Rohres, wobei der erste Anschlag eine im wesentlichen senkrecht zur Längsachse des Kabels oder Rohres angeordnete Scheibe ist, welche um eine zur Achse des Kabels oder Rohres im wesentlichen parallel verlaufende, gegenüber der Scheibe exzentrische Drehachse drehbar oder schwenkbar angeordnet ist, so daß die Entfernung des Auflagepunktes der Scheibe auf dem Kabel oder Rohr von der Längsachse desselben und damit die maximale Schnitttiefe des Messers durch Drehen oder Schwenken der Scheibe um die Drehachse veränderbar ist. Auch hier kann also die Schnittiefe je nach Bedarf auf unterschiedliche Werte eingestellt werden. Die Scheibe kann z.B. eine ellipsenförmige Grundfläche besitzen.

In einer weiteren Ausführungsform der Erfindung verläuft die Hauptebene des Messers ebenfalls parallel zur Längsachse des Kabels oder Rohres, wobei der erste Anschlag eine im wesentlichen senkrecht zur Achse des Kabels oder Rohres angeordnete Scheibe von nicht kreisförmiger Grundfläche ist und die Scheibe um eine zur Achse des Kabels oder Rohres im wesentlichen parallel verlaufende Drehachse drehbar oder schwenkbar angeordnet ist, so daß die Entfernung des Auflagepunktes der Scheibe auf dem Kabel oder Rohr von der Längsachse desselben und damit die maximale Schnitttiefe des Messers durch Drehen oder Schwenken der Scheibe um die Drehachse veränderbar ist. Auch hier kann also die Schnittiefe je nach Bedarf auf unterschiedliche Werte eingestellt werden. Die Scheibe kann hierbei z.B. eine ellipsenförmige oder eine polygonförmige Grundfläche besitzen.

Bevorzugt ist die Scheibe mittels eines lösbaren Rastmechanismusses in mindestens zwei verschiedenen Drehstellungen verrastbar.

In einer weiteren bevorzugten Ausführungsform der Erfindung ist im Bereich des Messers ein von dem ersten Anschlag in Längsrichtung der Schnittkante beanstandeter zweiter Anschlag so angeordnet, daß dieser die Schnittkante in Richtung des Kabels oder Rohres überragt und sich das Messer im Wesentlichen zwischen dem ersten Anschlag und dem zweiten Anschlag befindet. Der zweite Anschlag, welcher die Schnittkante in Richtung des Kabels oder Rohres überragt, dient nicht zur Begrenzung der Schnitttiefe; vielmehr eignet sich diese Ausführungsform besonders vorteilhaft zur Bearbeitung von Kabeln oder Rohren, von welchen bereits entlang einer bestimmten Länge eine äußere Schicht entfernt ist, so daß der Durchmesser des Kabels oder Rohres an einer Stelle stufenförmig zunimmt. Der zweite Anschlag kann dann nämlich vorteilhaft als Anschlag in Längsrichtung des Kabels oder Rohres gegen die Stufe dienen, um Schnitte längs der Mantellinie des Rohres oder Kabels von definierter Länge zu ermöglichen.

Gemäß einer weiteren Ausführungssform der Erfindung die Hauptebene des Messers parallel zur Längsachse des Kabels oder Rohres verläuft und die Schnittkante in Richtung der Längsachse des Kabels oder Rohres gegenüber derselben ein Gefälle aufweist, so daß die Schnitttiefe entlang der Längsrichtung des Messers nicht konstant ist.

Kurzbeschreibung der Zeichnung, in der zeigen:
Fig. 1 eine Seitenansicht einer Ausführungsform eines erfindungsgemäßen Schälgerätes mit einem zu bearbeitenden Rohr,
Fig.2 eine vergrößerte schematische Darstellung des Drehzapfens von Fig. 1,
Fig. 3 eine Seitenansicht einer anderen Ausführungsform eines erfindungsgemäßen Schälgerätes,
Fig. 4 eine Seitenansicht einer weiteren Ausführungsform eines erfindungsgemäßen Schälgerätes, bei welcher jeder Arm einen Schaft aufweist,
Fig. 5 eine Seitenansicht einer weiteren Ausführungsform eines erfindungsgemäßen Schälgerätes, bei welcher jeder Arm eine Stange mit Griff aufweist,
Fig. 6 eine Seitenansicht einer weiteren Ausführungsform eines erfindungsgemäßen Schälgerätes, bei welcher die Arme mittels eines lösbaren Arretiermechanismus in ihrer gegenseitigen Position arrtetierbar sind,
Fig. 7 eine Draufsicht auf eine Ausführungsform eines Schälgerätes mit einem ersten und einem zweiten Anschlag aus der Richtung, welche in Fig. 1 mit einem Pfeil gekennzeichnet ist, wobei das Lager, das Gegenlager und die Arme des Schälgerätes weggelassen sind,
Fig. 8A eine Draufsicht auf eine Ausführungsform des ersten Anschlags von Fig. 7 aus der Richtung, welche in Fig. 7 mit einem Pfeil gekennzeichnet ist,
Fig. 8B eine Draufsicht auf eine andere Ausführungsform des ersten Anschlags von Fig. 7 aus der Richtung, welche in Fig. 7 mit einem Pfeil gekennzeichnet ist,
Fig. 9A,B,C eine weitere Ausführungsform eines erfindungemäßen Schälwerkzeuges, und
Fig. 10 und Fig. 11 weitere Ausführungsformen erfindungsgemäßer Schälgeräte, bei welchen die Arme jeweils mittels eines lösbaren Arretiermechanismus in ihrer gegenseitigen Position arrtetierbar sind.

### Wege zur Ausführung:

Die Figuren zeigen schematische Ansichten verschiedener bevorzugter Ausführungsformen eines erfindungsgemäßen Schälgerätes.

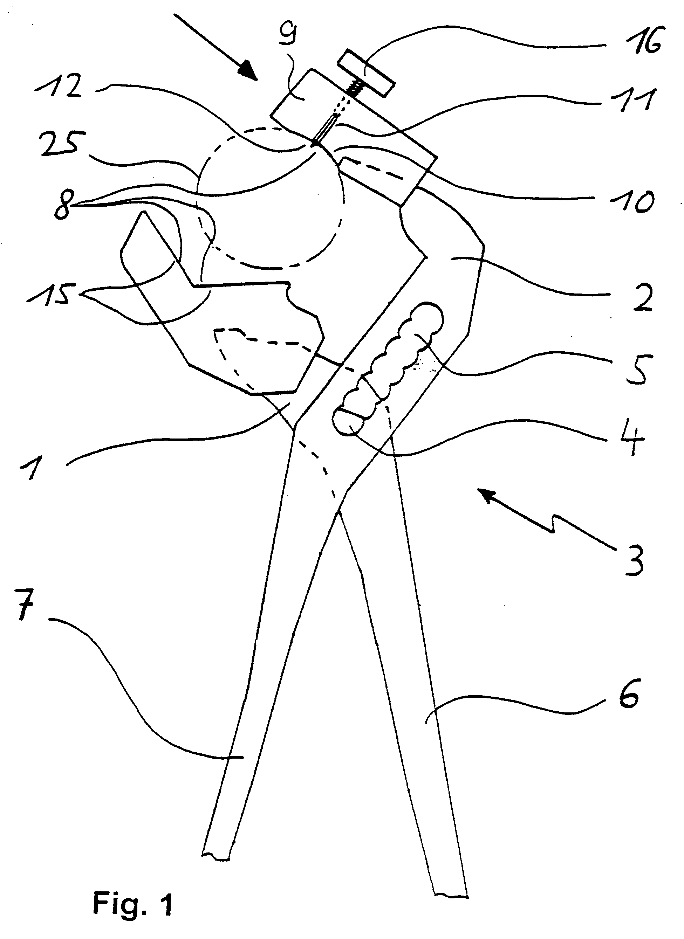

Fig. 1 zeigt eine Seitenansicht einer Ausführungsform eines erfindungsgemäßen Schälgerätes 3 mit einem zu bearbeitenden Rohr 25. Das Schälgerät 3 ist im wesentlichen von der Form einer zweiarmigen Zange und umfaßt einen ersten Arm 1, an welchem ein Lager 15 und ein Drehzapfen 4 angeordnet sind, sowie einen zweiten Arm 2, welcher ein Gegenlager 10 mit einem Messer 11 aufweist und gegenüber dem ersten Arm 1 um den Drehzapfen 4 von einer geöffneten in eine geschlossene Stellung und umgekehrt schwenkbar ist. Sowohl das Lager 15 als auch das Gegenlager 10 sind als Gleitlager ausgeführt. Das Messer 11 ist mittels eines Verstellmechanismus 16 höhenverstellbar an einem Messerhalter 9 befestigt.

Das Lager 15 bildet zusammen mit dem Gegenlager 10 in geschlossener Stellung ein Aufnahmelager 8 zur stabilen Mehrpunktlagerung und Rundführung des Schälgeräts 3 bezüglich des Rohres 25.

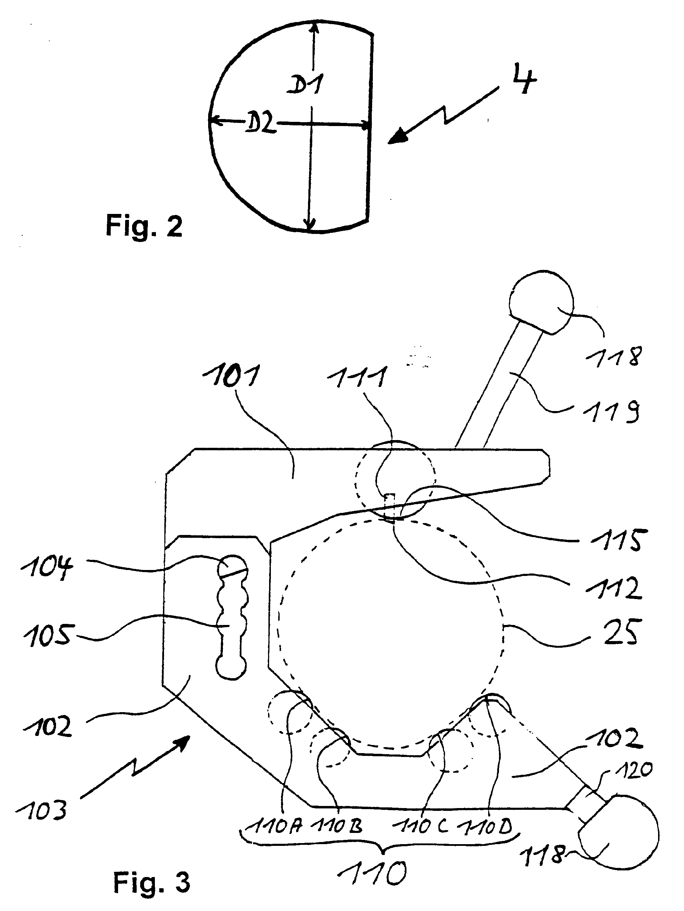

Der Drehzapfen 4 weist in einer ersten Richtung senkrecht zu seiner Achse einen ersten Durchmesser D1 und in einer zweiten Richtung senkrecht zu seiner Achse einen zweiten Durchmesser D2 auf, welcher kleiner ist als der erste Durchmesser D1 (Fig. 2).

Der zweite Arm 2 (Fig. 1) weist ein Langloch 5 auf, welches den Drehzapfen 4 aufnimmt und in einer zur Richtung vom Lager 15 zum Gegenlager 10 im wesentlichen parallelen Richtung verläuft. Das Langloch 5 ist durch eine Mehrzahl von in einer Reihe angeordneten Bohrungen und zwischen den Bohrungen liegenden Verengungen gebildet, wobei der Durchmesser der Bohrungen größer als der erste Durchmesser und die lichte Weite der Verengungen kleiner als der erste und größer als der zweite Durchmesser D1, D2 ist.

Der Drehzapfen 4 ist in Bezug auf seine Achse so ausgerichtet, daß dieser ähnlich wie eine handelsübliche Rohrzange in geöffneter Stellung zur Aufweitung bzw. Verengung des Aufnahmelagers 8 in Längsrichtung des Langlochs 5 durch die Verengungen hindurch in jede der Bohrungen verschiebbar und in geschlossener Stellung gegenüber einer Verschiebung in dieser Richtung in einer der Bohrungen arretiert ist.

Der erste Arm 1 verfügt über einen ersten Schaft 6 und der zweite Arm 2 über einen zweiten Schaft 7, wobei der erste und der zweite Schaft 6, 7 jeweils als Hebelarm und Handgriff dienen und eine Einhand-Bedienung des erfindungsgemäßen Schälgerätes 3 erlauben. Der Drehzapfen 4 ist in der Ausführungsform von Fig. 1 im wesentlichen zwischen dem Aufnahmelager 8 und dem ersten und zweiten Schaft 6, 7 angeordnet.

In einer Ausführungsform umfaßt das Schälgerät 3 eine handelsübliche Rohrzange, welche mit einem Lager 15, einem Gegenlager 10 und einem Messer 11 ausgestattet und somit zu einem erfindungsgemäßen Schälgerät nachgerüstet ist.

Fig. 3 zeigt eine Seitenansicht einer anderen Ausführungsform 103 eines erfindungsgemäßen Schälgerätes. An einem ersten Arm 101 sind ein Lager 115, ein Messer 111 und ein Drehzapfen 104 angeordnet. Ein zweiter Arm 102 trägt ein Gegenlager 110 und ist gegenüber dem ersten Arm 101 um den Drehzapfen 104 von einer geöffneten in eine geschlossene Stellung und umgekehrt schwenkbar ist. Sowohl das Lager 115 als auch das Gegenlager 110 sind als Rollenlager ausgeführt.

Das Lager 115 bildet zusammen mit dem Gegenlager 110 in geschlossener Stellung ein Aufnahmelager 108 zur stabilen Mehrpunktlagerung und Rundführung des Schälgeräts 103 bezüglich des Rohres 25.

Das Gegenlager 110 des Schälwerkzeuges 103 von Fig. 3 umfaßt vier Auflager 110A,110B,110C,110D. Mindestens zwei derselben liegen in der geschlossenen Stellung auf dem Kabel oder Rohr 25 auf und spannen mit dem Lager 115 ein Dreieck auf, durch welches die Achse des Kabels oder Rohres 25 verläuft, so daß dasselbe durch das Aufnahmelager 108 stabil aufgenommen ist und nicht seitlich entweichen kann. Je nach Rohr- oder Kabeldurchmesser liegen hierbei die äußeren Auflager 110A,110D oder die beiden inneren Auflager 110B,110C, welche zusammen das Gegenlager 110 bilden, auf dem Kabel oder Rohr 25 auf.

Das Aufnahmelager 108 ist im Gegensatz zu dem Aufnahmelager 8 der Ausführungsform von Fig. 1 im wesentlichen zwischen dem Drehzapfen 104 und dem ersten und zweiten Schaft 106, 107 angeordnet. Der Drehzapfen 104 weist in einer ersten Richtung senkrecht zu seiner Achse einen ersten Durchmesser und in einer zweiten Richtung senkrecht zu seiner Achse einen zweiten Durchmesser auf, welcher kleiner ist als der erste Durchmesser des Drehzapfens 104.

Der zweite Arm 102 weist ein Langloch 105 auf, welches den Drehzapfen 104 aufnimmt und in einer zur Richtung vom Lager 115 zum Gegenlager 110 im wesentlichen parallelen Richtung verläuft. Das Langloch 105 ist durch eine Mehrzahl von in einer Reihe angeordneten Bohrungen und zwischen den Bohrungen liegenden Verengungen gebildet, wobei der Durchmesser der Bohrungen größer als der erste Durchmesser des Drehzapfens 104 und die lichte Weite der Verengungen kleiner als der erste und größer als der zweite Durchmesser des Drehzapfens 104 ist.

Der Drehzapfen 104 ist in Bezug auf seine Achse so ausgerichtet, daß dieser in geöffneter Stellung zur Aufweitung bzw. Verengung des Aufnahmelagers 108 in Längsrichtung des Langlochs 105 durch die Verengungen hindurch in jede der Bohrungen verschiebbar und in geschlossener Stellung gegenüber einer Verschiebung in dieser Richtung in einer der Bohrungen arretiert ist.

Der erste Arm 101 bzw. der zweite Arm 102 verfügen zur Vereinfachung der Handhabung über eine Stange 119 bzw. 120, an welcher jeweils ein Griff 118 angeordnet ist, wobei die Stangen 119, 120 als Hebelarm zur Krafteinleitung in das Messer 111 sowie zur Ausführung einer Drehbewegung dient.

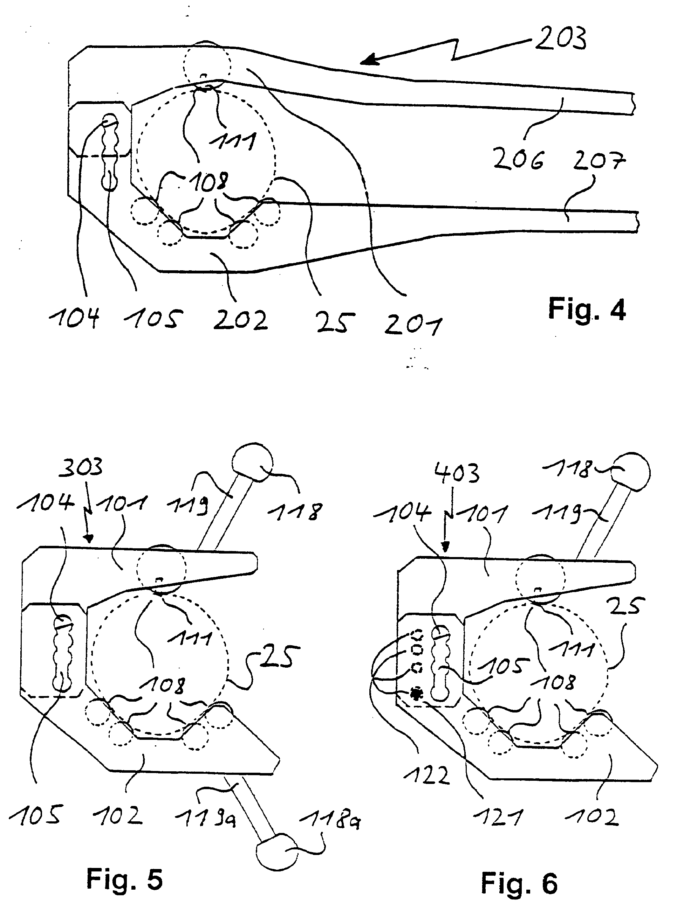

Fig. 4 zeigt eine Seitenansicht einer Abwandlung 203 der Ausführungsform des erfindungsgemäßen Schälgerätes 103 von Fig. 3, bei welcher die Stange 119 und der Griff 118 von Fig. 3 fehlen und statt dessen der erste Arm 201 einen ersten Schaft 206 und der zweite Arm 202 einen zweiten Schaft 207 aufweist, welche als Hebelarm zur Krafteinleitung in das Messer 111 sowie zur Ausführung einer Drehbewegung dienen. Vorzugsweise verlaufen der erste und zweite Schaft 206, 207 in geschlossener Stellung im wesentlichen parallel zueinander, so daß bei Ausführen einer Drehbewegung eine Einhand-Bedienung ermöglicht wird.

Fig. 5 zeigt eine Seitenansicht einer weiteren Abwandlung 303 der Ausführungsform 103 des erfindungsgemäßen Schälgerätes von Fig. 3, bei welcher der zweite Arm 102 zur weiteren Erleichterung der Handhabung eine Stange 119a und einen Griff 118a trägt.

Fig. 6 zeigt eine Seitenansicht einer weiteren Abwandlung 403 des erfindungsgemäßen Schälgerätes 203 von Fig. 3, bei welcher die Arme 101,102 mittels eines lösbaren Arretiermechanismus 121, 122 in ihrer gegenseitigen Position gegen eine Schwenkbewegung in die geöffnete Stellung arretierbar sind.

Der Arretiermechanismus des Schälgerätes von Fig. 6 ist als Splintmechanismus 121,122 ausgebildet, welcher eine Mehrzahl von vier ersten Splintlöchern 122 aufweist, welche im ersten Arm 101 angeordnet sind und deren gegenseitiger Abstand der demjenigen der Achsen der Bohrungen des Langloches 105 entspricht, so daß jedes der ersten Splintlöcher des ersten Armes mit einer Bohrung des Langloches 105 korrespondiert. In Fig. 6 sind die vier ersten Splintlöcher 122 durch den zweiten Arm 102 verdeckt und daher gestrichelt eingezeichnet.

Der Splintmechanismus des Schälgerätes 403 von Fig. 6 umfaßt ferner einen Splint 121, welcher durch ein (nicht gezeigtes) zweites Splintloch im zweiten Arm 102 hindurch in das unterste der ersten Splintlöcher 122 im ersten Arm 101 eingreift, wobei die Achsen des untersten ersten und des zweiten Splintlochs im wesentlichen zusammenfallen. Somit durchragt der Splint 121 sowohl den ersten als auch den zweiten Arm 101, 102, so daß eine Schwenkbewegung des ersten gegenüber dem zweiten Arm 101, 102 durch den Arretiermechanismus 121, 122 unterbunden ist.

Zur Anpassung des Schälgerätes 403 von Fig. 6 an einen anderen Durchmesser des Rohres wird der Splint 121 aus dem untersten der ersten Splintlöcher herausgezogen, der erste Arm 101 in geöffnete Stellung geschwenkt, der Drehzapfen 104 in Längsrichtung des Langlochs 105 in eine andere Bohrung verschoben und der erste Arm 101 in geschlossene Stellung geschwenkt, so daß der Drehzapfen 104 in der Bohrung arretiert ist, wobei die Achse eines der anderen ersten Splintlöcher 122 des ersten Armes 101 mit der Achse des zweiten Splintlochs zusammenfällt und der Splint 121 zur erneuten Arretierung gegen Schwenkbewegungen des ersten Armes 101 in dieses Splintloch 122 eingeschoben werden kann.

In einer vorteilhaften Weiterbildung dieser Ausführungsform der Erfindung ist das Messer 111 mittels eines elastischen Bauelements, insbesondere Tellerfeder, Tellerfederpaket oder Druckfeder, in einer Richtung parallel zu seiner Hauptebene und senkrecht zu seiner Schnittkante federnd angeordnet.

Diese Elastizität ist bei der Dosierung der Kraft, mit der das Messer 111 auf bzw. in die Wandung des Rohres 25 gedrückt wird, von Nutzen. Des weiteren ermöglicht diese Elastizität das Abschälen von Rohren von unregelmäßig oder z.B. elliptisch verformter Querschnittsform.

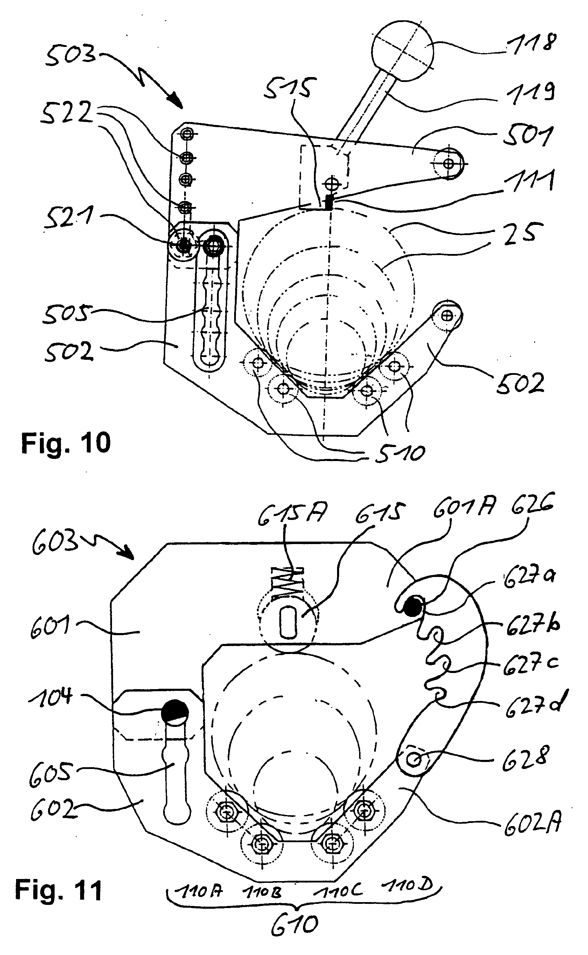

Fig. 10 und Fig. 11 dienen zur Erläuterung weiterer Ausführungsformen erfindungsgemäßer Schälgeräte 503 bzw. 603, bei welchen die Arme 501,502 bzw. 601,602 jeweils mittels eines lösbaren Arretiermechanismus in ihrer gegenseitigen Position arrtetierbar sind.

Der Arretiermechanismus 521,522 des Schälgerätes 503 von Fig. 10 ist ebenfalls als Splintmechanismus ausgebildet und besitzt eine Mehrzahl von fünft ersten Splintlöchern 522, welche im ersten Arm 501 angeordnet sind und deren gegenseitiger Abstand der demjenigen der Achsen der Bohrungen des Langloches 505 entspricht. Das Wirkungsprinzip des Splintmechanismus 521,522 von Fig. 10 entspricht im wesentlichen demjenigen des Splintmechanismus 121,122 von Fig. 6.

Bevorzugt ist der. Splint 121 bzw. 521 mit einer Feder versehen, welche ein selbsttätiges Einrasten des Splints in das Splintloch 122 bzw. 522 bewirkt.

Die in Fig. 6 und Fig. 10 veranschaulichten Ausführungsformen 403, 503 eines erfindungsgemäßen Schälgerätes sind besonders vorteilhaft zum Einsatz unter sehr beengten Platzverhältnissen geeignet.

Das Lager 515 des Schälwekzeuges 503 ist als Gleitlager, z.B. als Vortriebsplatte, oder auch als Messerhalter ausgebildet.

In Fig. 11 ist ein erfindungsgemäßes Schälgerät 603 mit einer anderen Ausführungsform eines Arretiermechanismusses veranschaulicht. Dieser umfaßt ein Zugglied 625, welches die von dem Langloch 605 abgewandten Endbereiche 601A,602A des ersten und des zweiten Armes 601,602 in der geschlossenen Stellung lösbar miteinander zu verriegeln imstande ist. Aufgrund dieser Verriegelung ist ein Schwenken des ersten Arms 601 gegenüber dem zweiten Arm 602 in Richtung der geöffneten Stellung unterbunden. Die beiden Arme 601,602 umschließen dabei zusammen mit dem Zugglied 625 das Kabel oder Rohr 25 vollständig, wobei das Lager 615 sowie das Gegenlager 610 unter Druck auf dem Kabel oder Rohr 25 aufliegen. Je nach Rohr- oder Kabeldurchmesser liegen hierbei die äußeren Auflager 110A,110D oder die beiden inneren Auflager 110B,110C, welche zusammen das Gegenlager 610 bilden, auf dem Kabel oder Rohr 25 auf.

Das Zugglied 625 ist in seinem einen Endbereich am zweiten Arm 602 des Schälgerätes 603 mittels eines Gelenks 628 angelenkt. Der andere Endbereich des Zuggliedes 625 ist mittels einer Aussparung 627a so geformt, daß, er einen am ersten Arm 601 angeordneten Zapfen 626 so zu hintergreifen imstande ist, daß eine Verriegelung des ersten gegenüber dem zweiten Arm 601,602 erfolgt. Die Verriegelung kann gelöst werden, indem das Zugglied 625 im Uhrzeigersinn, bezogen auf die Draufsicht-Blickrichtung von Fig. 11, um das Gelenk 628 geschwenkt wird, bis der Zapfen 626 freigegeben ist. Der Zapfen 626 und die Aussparung 627a bilden somit einen lösbaren Einrastmechanismus zur Arretierung des Zuggliedes 625 am ersten Arm 601 und somit der beiden Arme 601,602 aneinander.

Das Zugglied 625 besitzt weitere Aussparungen 627b,627c,627d, welche ebenfalls den Zapfen 626 so zu hintergreifen vermögen, daß eine Verriegelung des ersten gegenüber dem zweiten Arm 601,602 erfolgt. Auf diese Weise kann das Schälwerkzeug 603 an unterschiedliche Kabel- oder Rohrdurchmesser angepaßt werden. Der Einrastmechanismus besitzt somit zum Zweck der Anpassung an verschiedene Kabel- oder Rohrdurchmesser eine Mehrzahl von Einraststufen, welche durch die Aussparungen 627a,627b,627c,627d gebildet sind.

Gemäß der Ausführungsform von Fig. 11 sind die Aussparungen 626,627a,627b,627c,627d einseitig offen ausgebildet. Gemäß einer anderen Ausführungsform (nicht gezeigt) sind die Aussparungen als bohrungen ausgebildet, welche den Zapfen 626 aufzunehmen imstande sind.

Das Gegenlager 610 des Schälwerkzeuges 603 von Fig. 11 umfaßt vier Auflager 110A,110B,110C,110D. Mindestens zwei derselben liegen in der geschlossenen Stellung auf dem Kabel oder Rohr 25 auf und spannen mit dem Lager 615 ein Dreieck auf, durch welches die Achse des Kabels oder Rohres 25 verläuft, so daß dasselbe durch das Lager 615 und das Gegenlager 615 stabil aufgenommen ist und nicht seitlich entweichen kann.

Das Lager (615) ist mittels einer Druckfeder 615A bezüglich der Achse des Kabels oder Rohres 25 radialer Richtung federnd an dem ersten 601 angeordnet. Diese Elastizität erleichtert das Abschälen von Kabeln bzw. Rohren von unregelmäßig oder z.B. elliptisch verformter Querschnittsform. Ferner kann durch diese Elastizität vorteilhaft erreicht werden, daß das Lager 615 und das Gegenlager 610 auch bei aneinander arretierten Armen 601,602 des Schälwerkzeuges 603 stets unter Druck am Kabel oder Rohr 25 anliegen.

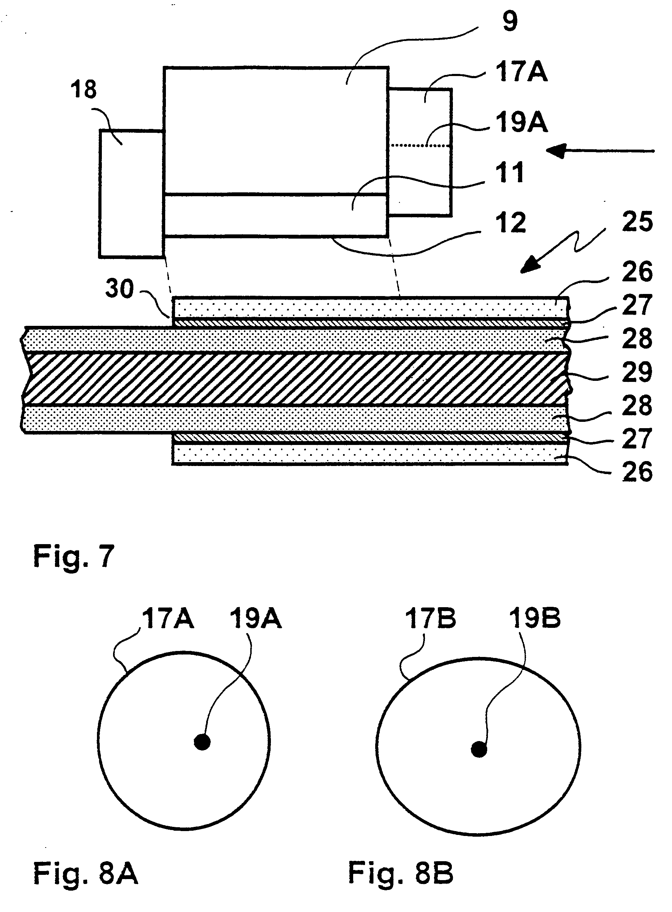

Fig. 7 zeigt eine Draufsicht auf eine Ausführungsform eines Schälgerätes mit einem ersten und einem zweiten Anschlag aus der Richtung, welche in Fig. 1 mit einem Pfeil gekennzeichnet ist, wobei das Lager, das Gegenlager und die Arme des Schälgerätes weggelassen sind. Im Bereich des Messers 11 ist ein erster Anschlag 17A so angeordnet ist, daß die Schnittkante 12 den ersten Anschlag 17A in Richtung des Rohres 25 überragt und die maximale Schnitttiefe des Messers 11 durch den ersten Anschlag 17A begrenzt ist. Die Hauptebene des Messers 11 verläuft parallel zur Längsachse des Rohres 25. Der erste Anschlag ist eine im wesentlichen senkrecht zur Längsachse des Rohres 25 angeordnete Scheibe 17A, welche um eine zur Achse des Rohres 25 im wesentlichen parallel verlaufende, gegenüber der Scheibe exzentrische Drehachse 19A drehbar oder schwenkbar angeordnet ist, so daß die Entfernung des Auflagepunktes der Scheibe 17A auf dem Rohr 25 von der Längsachse desselben und damit die maximale Schnitttiefe des Messers 11 durch Drehen oder Schwenken der Scheibe 17A um die Drehachse 19A veränderbar ist.

In dieser bevorzugten Ausführungsform der Erfindung ist im Bereich des Messers 11 ein von dem ersten Anschlag 17A in Längsrichtung der Schnittkante 12 beanstandeter zweiter Anschlag 18 so angeordnet, daß dieser die Schnittkante 12 in Richtung des Kabels oder Rohres 25 überragt und sich das Messer 11 im Wesentlichen zwischen dem ersten Anschlag 17A und dem zweiten Anschlag 18 befindet. Das Kabel kann z.B. ein Starkstromkabel 25 sein (Fig. 7 unten). Der zweite Anschlag 18, welcher die Schnittkante 12 in Richtung des Kabels 25 überragt, dient nicht zur Begrenzung der Schnitttiefe; vielmehr eignet sich diese Ausführungsform besonders vorteilhaft zur Bearbeitung von Kabeln 25, von welchen bereits entlang einer bestimmten Länge eine äußere Schicht oder äußere Schichten, z.B. die äußere Isolierung 26 und ein Metallschirm 27, entfernt ist, nicht jedoch eine innere Isolierschicht 28 und der Metallkern 29, so daß der Durchmesser des Kabels oder Rohres an einer Stelle stufenförmig zunimmt (Fig. 7 unten). Der zweite Anschlag 18 kann dann nämlich vorteilhaft als Anschlag in Längsrichtung des Kabels 25 gegen die Stufe 30 dienen, um mit geringstem Aufwand Schnitte längs der Mantellinie des Kabels 25 von genau definierter Länge zu ermöglichen. Solche Schnitte genau definierter Länge sind z.B. erforderlich, um eine Erdungshülse an dem Kabel anbringen zu können, welche den Anschluß einer Erdungsleitung an den Metallschirm 27 ermöglichen. Derartige Anschlüsse können in einem Endbereich des Kabels 25, aber auch entfernt von dessen Endbereichen erforderlich sein, wo die Erdungshülse zugleich den entfernten Teil des Metallschirms 27 überbrücken soll. Die Schnittlänge ist identisch mit der Länge der Schnittkante 12 und beginnt vorteilhafterweise exakt an der Stufe 30.

Die Entfernung der äußeren Isolierung 26 und des Metallschirms 27 und damit die Schaffung der Stufe 30 im Bereich der Anschlußstelle kann z.B. mit einer anderen Ausführungsform des erfindungsgemäßen Schälwerkzeuges erfolgen, welche keinen zweiten, das Messer 11 in Richtung des Kabels 25 überragenden zweiten Anschlag 18 besitzt.

Fig. 8A zeigt eine Draufsicht auf die Scheibe 17A von Fig. 7 aus der Richtung, welche in Fig. 7 mit einem Pfeil gekennzeichnet ist. Die Drehachse 19A ist exzentrisch auf der Grundfläche der Scheine 17A angeordnet.

Fig. 8B zeigt eine Draufsicht auf eine andere Ausführungsform des ersten Anschlags aus der Richtung, welche in Fig. 7 mit einem Pfeil gekennzeichnet ist. der erste Anschlag 17B weist hier eine ellipsenförmige Grundfläche auf und ist um eine zur Achse des Kabels oder Rohres 25 im wesentlichen parallel verlaufende Drehachse 19B drehbar oder schwenkbar angeordnet, so daß die Entfernung des Auflagepunktes der Scheibe 17B auf dem Kabel oder Rohr 25 von der Längsachse desselben und damit die maximale Schnitttiefe des Messers 11 durch Drehen oder Schwenken der elliptischen Scheibe 17B um die Drehachse 19B veränderbar ist.

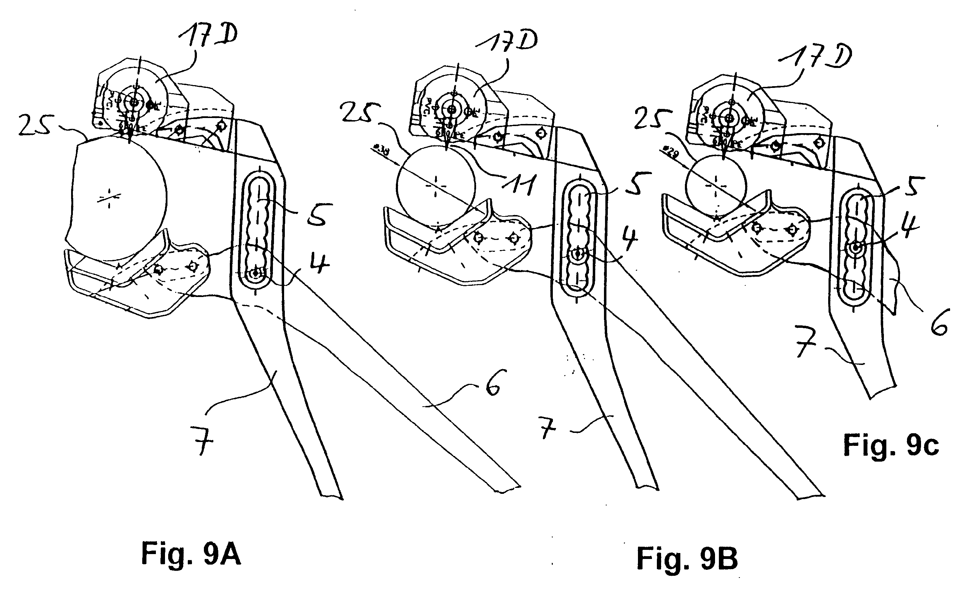

Die Fig. 9A,B,C zeigen eine weitere Ausführungsform eines erfindungemäßen Schälwerkzeuges. Die Hauptebene des Messers 11 verläuft parallel zur Längsachse des Kabels oder Rohres 25. Das Schälgerät besitzt einen ersten Anschlag 17D und einen zweiten Anschlag 18 (Fig. 7), welcher bereits unter Bezug auf Fig. 7 erläutert wurde und in den Fig. 9A,B,C nicht gezeigt ist. Der erste Anschlag 17D ist eine im wesentlichen senkrecht zur Achse des Kabels oder Rohres 25 angeordnete Scheibe 17D von nicht kreisförmiger Grundfläche; vielmehr besitzt die Grundfläche im wesentlichen die Form eines an drei Seiten sehnenförmig abgeschnittenen Kreises. Jede dieser drei seiten weist einen anderen Abstand zur Drehachse der Scheibe 17D auf.

Die Scheibe 17D ist um eine zur Achse des Kabels oder Rohres 25 im wesentlichen parallel verlaufende Drehachse drehbar oder schwenkbar angeordnet, so daß die Entfernung des Auflagepunktes der Scheibe 17D auf dem Kabel oder Rohr 25 von der Längsachse desselben und damit die maximale Schnitttiefe des Messers 11 durch Drehen der Scheibe 17D um ihre Drehachse veränderbar ist.. Die Scheibe 17D ist mittels eines nicht gezeigten lösbaren Rastmechanismusses in vier verschiedenen Drehstellungen verrastbar, welche sich jeweils um einen Drehwinkel der Scheibe 17D von etwa 90° unterscheiden. In dreien der vier somit möglichen Raststellungen der Scheibe 17D ist jeweils eine der sehnenförmig abgeschnittenen Seiten des Kreises, welcher die Grundfläche der Scheine 17D bildet, dem Rohr 25 zugewandt, so daß die Entfernung des Auflagepunktes der Scheibe 17D auf dem Kabel oder Rohr 25 von der Längsachse desselben und damit die maximale Schnitttiefe des Messers 11 durch Drehen der Scheibe 17D um ihre Drehachse veränderbar ist.

### Bezugszeichenliste:

- 1, 101,201,501,601: erster Arm
- 2, 102,202,502,602: zweiter Arm
- 3, 103,203,403,503,603: Schälgerät
- 4, 104: Drehzapfen
- 5, 105,505,605: Langloch
- 6, 106: erster Schaft
- 7, 107: zweiter Schaft
- 8, 108: Aufnahmelager
- 9: Messerhalter
- 10, 110,510,610: Gegenlager
- 11, 111: Messer
- 12, 112: Schnittkante von 11, 111
- 15,115,515,615: Lager
- 16: Verstellmechanismus
- 17A,B,C,D: erster Anschlag
- 18: zweiter Anschlag
- 19A,B,C: Drehachse von 17A,B,C
- 25: Rohr
- 25A: Achse von 25
- 26: äußere Isolierschicht von 25
- 27, 28: Metallschirm von 25, innere Isolierschicht von 25
- 29: Metallkern von 25
- 30: Stufe
- 110a,b,c,d: Auflager
- 118, 118a: Griff
- 119, 119a, 120: Stange
- 121,521: Splint
- 122,522: Splintlöcher in 101
- 601A,602A: Endbereich von 601,602
- 615A: Druckfeder
- 625: Zugglied
- 626: Zapfen
- 627a,b,c,d: Aussparungen in 625
- D1, D2: Durchmesser von 4 in der ersten, zweiten Richtung

## Patentansprüche

1. Schälgerät (3,103,203,303,403,503,603) in Form einer zweiarmigen Zange oder Zwinge zum Einschneiden oder Schälen einer äußeren Schicht oder von Schichten eines Kabels oder Rohres (25), insbesondere Kunststoffrohr (25) oder kunststoffbeschichtetes Rohr (25), umfassend einen ersten Arm (1,101,201,501,601) mit einem Lager (15,115,515,615) und einem Drehzapfen (4,104), sowie einen zweiten Arm (2,102,202,502,602), welcher ein Gegenlager (10,110,510,610) aufweist und gegenüber dem ersten Arm (1,101,201,501,601) um den Drehzapfen (4,104) von einer geöffneten in eine geschlossene Stellung und umgekehrt schwenkbar ist, wobei ein Messer (11,111) mit einer Schnittkante (12,112) entweder an dem ersten Arm (1,101,201,501, 601) im Bereich des Lagers (15,115,515,615) oder an dem zweiten Arm (2,102,202,502, 602) im Bereich des Gegenlagers (10,110,510,610) angeordnet und die Schnittkante (12,112) das Lager (15,115,515,615) bzw. das Gegenlager (10,110) in Richtung des Kabels oder Rohres (25) überragt, **dadurch gekennzeichnet, daß**
- das Lager (15,115,515,615) zusammen mit dem Gegenlager (10,110,510,610) in geschlossener Stellung ein Aufnahmelager (8,108) zur stabilen Mehrpunktlagerung und Rundführung des Schälgeräts (3,103,203,303,403,503,603) bezüglich des Kabels oder Rohres (25) bildet,
- der Drehzapfen (4,104) in einer ersten Richtung senkrecht zu seiner Achse einen ersten Durchmesser (D1) und in einer zweiten Richtung senkrecht zu seiner Achse einen zweiten Durchmesser (D2) aufweist, welcher kleiner ist als der erste Durchmesser (D1),
- der zweite Arm (2,102,202,502,602) ein Langloch (5,105,505,605) aufweist, welches den Drehzapfen (4,104) aufnimmt, in einer zur Richtung vom Lager (15,115,515,615) zum Gegenlager (10,110,510,610) im wesentlichen parallelen Richtung verläuft und durch eine Mehrzahl von in einer Reihe angeordneten Bohrungen und zwischen den Bohrungen liegenden Verengungen gebildet ist, wobei der Durchmesser der Bohrungen größer als der erste Durchmesser und die lichte Weite der Verengungen kleiner als der erste und größer als der zweite Durchmesser (D1, D2) ist, und
- der Drehzapfen (4,104) in Bezug auf seine Achse so ausgerichtet ist, daß dieser in geöffneter Stellung zur Aufweitung bzw. Verengung des Aufnahmelagers (8,108) in Längsrichtung des Langlochs (5,105,505,605) durch die Verengungen hindurch in jede der Bohrungen verschiebbar und in geschlossener Stellung gegenüber einer Verschiebung in dieser Richtung in einer der Bohrungen arretiert ist.

2. Schälgerät nach Anspruch 1, **dadurch gekennzeichnet,**
**daß** das Messer (11,111) mittels eines Verstellmechanismus in einer Richtung parallel zu seiner Hauptebene und senkrecht zu seiner Schnittkante (12,112) verstellbar ist.

3. Schälgerät nach Anspruch 1 oder 2, **dadurch gekennzeichnet,**
**daß** das Messer (11,111) mittels eines elastischen Bauelements, insbesondere Tellerfeder oder Druckfeder, in einer Richtung parallel zu seiner Hauptebene und senkrecht zu seiner Schnittkante (12,112) federnd angeordnet ist.

4. Schälwerkzeug nach Anspruch 1, **dadurch gekennzeichnet,**
**daß** das Gegenlager (10,110,510,610) mindestens zwei Auflager (110A,110B, 110C,110D) umfaßt, welche in der geschlossenen Stellung auf dem Kabel oder Rohr (25) aufliegen und mit dem Lager (15,115,515) ein Dreieck aufspannen, durch welches die Achse (25A) des Kabels oder Rohres (25) verläuft, wobei mindestens eines der Auflager (110A,110B,110C,110D) oder das Lager (15,115,515,615) mittels mindestens eines elastischen Bauelementes, insbesondere Druckfeder (615A) oder Tellerfeder, bezüglich der Achse (25A) des Kabels oder Rohres (25) in radialer Richtung federnd an dem ersten bzw. zweiten Arm (1,101,201,501,601, 2,102,202,502,602) angeordnet ist.

5. Schälwerkzeug nach Anspruch 1, **dadurch gekennzeichnet,**
**daß** das Messer (11,111) starr oder radial verstellbar an dem Lager (15,115,515,615) angeordnet ist.

6. Schälgerät nach einem der Ansprüche 1 bis 5, **dadurch gekennzeichnet,**
**daß** die Schnittkante (12,122) parallel oder senkrecht zur Achse des Kabels oder Rohres (25) angeordnet ist.

7. Schälgerät nach einem der Ansprüche 1 bis 5, **dadurch gekennzeichnet,**
**daß** das Lager (15,115,515,615) ein Gleitlager oder ein Prismenlager oder ein Rollenlager oder ein Walzenlager ist, und das Gegenlager (10,110,510,610) ein Gleitlager oder ein Prismenlager oder ein Rollenlager oder ein Walzenlager ist.

8. Schälgerät nach einem der Ansprüche 1 bis 7, **dadurch gekennzeichnet,**
**daß** der erste und/oder der zweite Arm (101,102,501) einen an einer als Hebelarm zur Ausführung einer Drehbewegung des Schälgeräts (103,303,403,503) dienenden Stange (119) angeordneten Griff (118) aufweist.

9. Schälgerät nach einem der Ansprüche 1 bis 8, **dadurch gekennzeichnet,**
**daß** der erste Arm (101,501,601) gegenüber dem zweiten Arm (102,502,602) in geschlossener Stellung mittels eines lösbaren Arretiermechanismus (121,122,123, 124,625,626,627) gegen eine Schwenkbewegung in die geöffnete Stellung arretierbar ist.

10. Schälgerät nach Anspruch 9, **dadurch gekennzeichnet,**
**daß** der Arretiermechanismus ein Splintmechanismus (121,122,521,522) ist.

11. Schälgerät nach Anspruch 10, **dadurch gekennzeichnet,**
**daß** der Splintmechanismus (121,122,521,522) eine Mehrzahl von ersten Splintlöchern (122,522), ein zweites Splintloch sowie einen Splint (121,521) umfaßt, wobei die ersten Splintlöcher (122,522) im ersten Arm (101,501) und das zweite Splintloch (121,521) im zweiten Arm (102,502) angeordnet sind oder umgekehrt, und der Splint (121,521) in der geschlossenen Stellung das zweite Splintloch sowie eines der ersten Splintlöcher (122,622) zu durchragen und somit eine Relativbewegung des ersten gegenüber dem zweiten Arm (101,501, 102,502) zu unterbinden imstande ist und der gegenseitige Abstand der ersten Splintlöcher (122,522) demjenigen der Achsen der Bohrungen des Langloches (105,505) entspricht, so daß jedes der ersten Splintlöcher mit einer Bohrung des Langloches (105,505) korrespondiert.

12. Schälgerät nach Anspruch 11, **dadurch gekennzeichnet,**
**daß** der Splint (121,521) mit einer Feder versehen ist, welche ein selbsttätiges Einrasten des Splints in die zweiten Splintlöcher (122,522) zu bewirken imstande ist.

13. Schälgerät nach Anspruch 9, **dadurch gekennzeichnet,**
**daß** der Arretiermechanismus (625,626,627) ein Zugglied (625) umfaßt, welches die von dem Langloch (605) abgewandten Endbereiche (601A,602A) des ersten und des zweiten Armes (601,602) in der geschlossenen Stellung so miteinander zu verriegeln imstande ist, daß ein Schwenken des ersten Arms (601) gegenüber dem zweiten Arm (602) in Richtung der geöffneten Stellung unterbunden ist und die beiden Arme (601,602) zusammen mit dem Zugglied (625) das Kabel oder Rohr (25) vollständig umschließen, wobei das Lager (615) und das Gegenlager (610) unter Druck auf dem Kabel oder Rohr (25) aufliegen.

14. Schälgerät nach Anspruch 13, **dadurch gekennzeichnet,**
**daß** das Zugglied (625) am ersten Arm (601) angelenkt und am zweiten Arm (602) mittels eines lösbaren Einrastmechanismusses (626,627a,627b,627c,627d) arretierbar ist oder umgekehrt.

15. Schälgerät nach Anspruch 14, **dadurch gekennzeichnet,**
**daß** der Einrastmechanismus (626,627a,627b,627c,627d) zum Zweck der Anpassung an verschiedene Kabel- oder Rohrdurchmesser eine Mehrzahl von Einraststufen (627a,627b,627c,627d) besitzt.

16. Schälgerät nach einem der Ansprüche 1 bis 15, **dadurch gekennzeichnet,**
**daß** der erste Arm (1, 201) einen ersten Schaft (6, 206) und der zweite Arm (2, 202) einen zweiten Schaft (7, 207) aufweist, wobei der erste und der zweite Schaft (6, 106, 7, 107) jeweils als Handgriff und Hebelarm dienen.

17. Schälgerät nach Anspruch 16, **dadurch gekennzeichnet,**
**daß** das der Drehzapfen (4) im wesentlichen zwischen dem Aufnahmelager (8) und dem ersten und zweiten Schaft (6, 7) angeordnet ist.

18. Schälgerät nach Anspruch 16, **dadurch gekennzeichnet,**
**daß** das Schälgerät (3) eine handelsübliche Rohrzange umfaßt, welche zusätzlich mit einem Lager (15), einem Gegenlager (10) und einem Messer (11) ausgestattet ist.

19. Schälgerät nach Anspruch 16, **dadurch gekennzeichnet,**
**daß** das Aufnahmelager (108) im wesentlichen zwischen dem Drehzapfen (104) und dem ersten und zweiten Schaft (106, 107) angeordnet ist.

20. Schälgerät nach einem der Ansprüche 1 bis 19, **dadurch gekennzeichnet,**
**daß** im Bereich des Messers (11, 111) ein erster Anschlag (17A,17B,17C,17D) so angeordnet ist, daß die Schnittkante (12, 112) den ersten Anschlag (17A,17B,17C,17D) in Richtung des Kabels oder Rohres (25) überragt und die maximale Schnitttiefe des Messers (11, 111) durch den ersten Anschlag (17A,17B,17C) begrenzt ist.

21. Schälgerät nach Anspruch 20, **dadurch gekennzeichnet,**
**daß** der erste Anschlag gegenüber dem Messer (11, 111) in zur Längsachse der Kabels oder Rohres (25) radialer Richtung verstellbar ist, so daß die maximale Schnitttiefe des Messers (11, 111) durch Verstellen des ersten Anschlages veränderbar ist.

22. Schälgerät nach Anspruch 20, **dadurch gekennzeichnet,**
**daß** die Hauptebene des Messers (11, 111) parallel zur Längsachse des Kabels oder Rohres (25) verläuft und der erste Anschlag eine im wesentlichen senkrecht zur Längsachse des Kabels oder Rohres (25) angeordnete Scheibe (17A,17D) ist, welche um eine zur Achse des Kabels oder Rohres (25) im wesentlichen parallel verlaufende, gegenüber der Scheibe exzentrische Drehachse (19A) drehbar oder schwenkbar angeordnet ist, so daß die Entfernung des Auflagepunktes der Scheibe (17A,17D) auf dem Kabel oder Rohr (25) von der Längsachse desselben und damit die maximale Schnitttiefe des Messers (11, 111) durch Drehen oder Schwenken der Scheibe (17A,17D) um die Drehachse (19A) veränderbar ist.

23. Schälgerät nach Anspruch 20, **dadurch gekennzeichnet,**
**daß** die Hauptebene des Messers (11, 111) parallel zur Längsachse des Kabels oder Rohres (25) verläuft und der erste Anschlag eine im wesentlichen senkrecht zur Achse des Kabels oder Rohres (25) angeordnete Scheibe (17B,17C) von nicht kreisförmiger Grundfläche ist, wobei die Scheibe (17B,17C) um eine zur Achse des Kabels oder Rohres (25) im wesentlichen parallel verlaufende Drehachse (19B,19C) drehbar oder schwenkbar angeordnet ist, so daß die Entfernung des Auflagepunktes der Scheibe (17B,17C) auf dem Kabel oder Rohr (25) von der Längsachse desselben und damit die maximale Schnitttiefe des Messers (11, 111) durch Drehen oder Schwenken der Scheibe (17B,17C) um die Drehachse (19B,19C) veränderbar ist.

24. Schälgerät nach Anspruch 22 oder 23, **dadurch gekennzeichnet,**
**daß** die Scheibe (17A,17B,17C) eine ellipsenförmige oder eine polygonförmige Grundfläche besitzt.

25. Schälgerät nach einem der Ansprüche 22 bis 24, **dadurch gekennzeichnet,**
**daß** die Scheibe (17A,17B,17C) mittels eines lösbaren Rastmechanismusses in mindestens zwei verschiedenen Drehstellungen verrastbar ist.

26. Schälgerät nach einem der Ansprüche 20 bis 25, **dadurch gekennzeichnet,**
**daß** im Bereich des Messers (11, 111) ein von dem ersten Anschlag (17A,17B,17C) in Längsrichtung der Schnittkante (12,112) beanstandeter zweiter Anschlag (18) so angeordnet ist, daß dieser die Schnittkante (12, 112) in Richtung des Kabels oder Rohres (25) überragt und sich das Messer (11, 111) im Wesentlichen zwischen dem ersten Anschlag (17A,17B,17C,17D) und dem zweiten Anschlag (18) befindet.

27. Schälgerät nach einem der Ansprüche 1 bis 26, **dadurch gekennzeichnet,**
**daß** die Hauptebene des Messers (11, 111) parallel zur Längsachse des Kabels oder Rohres (25) verläuft und die Schnittkante (12, 112) in Richtung der Längsachse des Kabels oder Rohres (25) gegenüber derselben ein Gefälle aufweist, so daß die Schnitttiefe entlang der Längsrichtung des Messers (11, 111) nicht konstant ist.
